Europäisches Patentamt

European Patent Office

Office européen des brevets

(19)

(11) **EP 0 886 817 B1**

(12) **EUROPÄISCHE PATENTSCHRIFT**

| | |
|---|---|
| (45) Veröffentlichungstag und Bekanntmachung des Hinweises auf die Patenterteilung: **11.09.2002 Patentblatt 2002/37** | (51) Int Cl.$^7$: **G05G 9/00** |
| (21) Anmeldenummer: **97954733.8** | (86) Internationale Anmeldenummer: **PCT/EP97/06909** |
| (22) Anmeldetag: **11.12.1997** | (87) Internationale Veröffentlichungsnummer: **WO 98/026341 (18.06.1998 Gazette 1998/24)** |

(54) **RASTSCHALTWERK**

LATCHED SWITCHING DEVICE

MECANISME DE COMMUTATION A CRANS

| | |
|---|---|
| (84) Benannte Vertragsstaaten: **DE FR GB IT** | • **FALLAK, Klaus** **D-59368 Werne (DE)** |
| (30) Priorität: **11.12.1996 DE 19651315** **08.08.1997 DE 29714164 U** | (74) Vertreter: **Hoffmeister, Helmut, Dr. Dipl.-Phys.** **Patentanwalt** **Goldstrasse 36** **48147 Münster (DE)** |
| (43) Veröffentlichungstag der Anmeldung: **30.12.1998 Patentblatt 1998/53** | (56) Entgegenhaltungen: |
| (73) Patentinhaber: **AB Elektronik GmbH** **59368 Werne (DE)** | **EP-A- 0 646 737    WO-A-93/20535** **DE-A- 3 138 827    DE-A- 19 503 615** |
| (72) Erfinder: • **APEL, Peter** **D-59394 Südkirchen (DE)** | |

## Beschreibung

Die Erfindung betrifft eine allgemein bekannte Vorrichtung zur Erzeugung von Anwahlstellungen, insbesondere zur Anwahl eines Fahrzeug-Bordcomputers, einer Waschmaschinen-Steuerung oder dgl., wie eines Personalcomputers, Computerspielen, Navigationssystemen, einer oder mehrerer Verbraucher oder anderer Ansteuerungsarten und -varianten.

Diese Vorrichtung zur Erzeugung von Anwahlstellungen weist auf,

- eine Stellungsgebereinheit, die aus einer Welle besteht, an der wenigstens ein erster zylinderförmiger Drehkörper angeordnet ist,

wobei der erste Drehkörper mit einer Außenverzahnung versehen ist, bei der peripher radial nach außen zeigende Stellungsgeberzähne mit dazwischenliegenden Stellungsgeberzahnlücken angeordnet sind, und wobei dem ersten Drehkörper eine Magnetisierungseinheit zugeordnet ist, und

- eine wenigstens teilweise koaxial um den ersten Drehkörper der Stellungsgebereinheit angeordnete erste Stellungsanwahleinheit, die aus einem Zahnkranz besteht, der mit einer Innenverzahnung versehen ist, bei der peripher radial nach innen zeigende Zähne und dazwischenliegende Zahnlücken angeordnet sind.

Aus HILDEBRAND, S.: Feinmechanische Bauelemente, Carl Hanser Verlag München 1972, S. 676 bis 686 ist ein Rastgesperre bekannt. Rastgesperre dienen zum Erzeugen und Erhalten von Vorzugslagen eines Sperrstückes. Sie müssen grundsätzlich als Form-Grenzkraft-Gesperre ausgeführt werden. Bei ihnen gibt es zwischen den Rastlagen neutrale Gebiete, innerhalb derer das Rastgesperre unwirksam ist. Das Gesperre muß immer von einer Hilfskraft gegen das Sperrstück gedrückt werden. Sie sind als rotierende Kreisscheiben ausgeführt, in die ein Rastelement eingreift. Das Rastgesperre kann mit einfachem Hebel und neutralen Zwischenstellungen, mit Mälzeingriff, mit Federgriff, als Doppelrast zur Entlastung der Achsen, als Kantelrast oder als Axialrastgesperre ausgeführt werden.

Allgemein muß beachtet werden, daß der Übergang der Bewegung in die Rastlage und der umgekehrte Vorgang eine besondere Rolle spielen. Hierbei sind verschiedene Kräfte zu berücksichtigen, die nachhaltig den mechanischen Verschleiß und damit die Lebensdauer des Rastgesperres beeinflussen können. Gezeigt wird außerdem ein Magnetrastgesperre. Hierbei rotiert ein Zahnrad um eine Achse. In Verlängerung der Achse stehen dem Zahnrad zwei zahnförmige Stifte gegenüber, die mit einem Magnet in Verbindung stehen. Hingewiesen wird allerdings nur darauf, daß das Magnetrastgesperre einen berührungslosen Eingriff hat. Er kann Wände aus nicht ferromagnetischen Stoffen durchdringen.

Aus der EP-A-3 66 132 ist eine Bedienvorrichtung bekannt, die als zentrales Element einen Drehschalter aufweist, der in definierten Raststellungen um seine Achse drehbar ist. Mit Hilfe des Drehschalters ist es möglich, zu verschiedenen Funktionsgruppen (Menues) geordnete Funktionen für eine entsprechende Einrichtung eines Kraftfahrzeugs auszuwählen. Bei diesen Einrichtungen kann es sich um ein Navigationssystem, eine Heiz-/Klimasteuerung, ein Autotelefon, ein Autoradio, ein Fernseher, ein Bord-Computer oder eine sonstige Einrichtung für verschiedene Bedien-, Anzeige- oder Wiedergabefunktionen handeln. Zur Auswahl der Funktionsgruppe wird der Drehschalter in axialer Richtung kurzfristig gedrückt. Damit wird die ausgewählte Funktionsgruppe eingestellt. Auf der Bildschirmanzeige erscheint nunmehr die der jeweiligen Funktionsgruppe zugeordneten einzelnen Funktionen.

Allerdings wird nur die Anwahl bestimmter Funktionsgruppen mit Hilfe des Drehschalters und die Auswahl durch das Drücken in axialer Richtung beschrieben. Angaben über die Realisierung der Anwahlstellungen, der Stellungsabgaben und der Stellungserfassungen werden nicht gemacht.

Weiterhin ist aus der FR-A-2 731 090 ein Multifunktionsschalter bekannt, bei dem eine Bedienwippe mit einem Kommandoorgan und einem Joystick vorhanden ist, die in einem Gelenkmittel in einem Zwischenteil bewegbar sind. Das Kommandoorgan und der Joystick sind starr miteinander verbunden. Durch Krafteinwirkung quer zur Drehachse des Kommandoorgans wird dieses zusammen mit dem Joystick in verschiedene Drehrichtungen bewegt und hiermit ein Kommando ausgelöst. Unter dem Handhabungsorgan befindet sich eine halbkugelförmige Verschließmembran, die das Kommandoorgan wenigstens teilweise umgibt.

Nachteilig ist, daß der Multifunktionsschalter durch seinen mechanischen Aufbau dem üblichen Verschleiß unterliegt. Hierdurch besteht die Gefahr, daß es zu Fehleinstellungen kommen.

In der DE-C-19 505 215 wird eine Bedienvorrichtung offenbart, wobei eine Umschaltung zwischen Funktionen mit einem Drehschalter und die Auswahl der Funktionen mit einem weiteren Schalter erfolgt (Drei-Spiegel-Einstellung). Hierzu ist dann eine Bedienwippe mit einer Grundeinheit und einem Stellglied vorhanden. Die Grundeinheit ist starr mit der Bedienvorrichtung verbunden. Das Stellglied wird durch Kraftwirkung quer zur Drehachse in Kippstellungen abgekippt. Durch die Kippbewegungen in die jeweilige Richtung wird dann zumindest eine Schaltfunktion ausgelöst.

Aus der DE-A-3 138 827 ist ein Gangwähler für ein Getriebe bekannt, bei dem die Stellung des Schalthebels mittels magnetempfindlicher Sensoren und mittels am Schalthebel befestigter Magnete kontakt- und berührungslos abfragbar ist. Die magnetempfindlichen Sensoren sind dabei entweder so angeordnet, daß für jede zu unterscheidende Stellung des Schalthebels ein eigner Sensor vorgesehen ist oder daß weniger Sensoren als Gänge vorgesehen sind, wobei dann die Stellung des Schalthebels aus der Kombination der jeweils angesteuerten Sensoren nach einem Code ermittelt wird.

Nachteilig ist, daß der Gangwähler nur zur Erfassung der Stellung des Schalthebels für eine Getriebeschaltung geeignet ist.

In der DE-A-19 503 615 wird eine zum zweidimensionalen Steuern oder zum zweidimensionalen Messen dienende Anordnung beschrieben. Sie weist einen räumlich verschwenkbaren Steuerknüppel auf, der aus einem Stab und einer Gelenkkugel besteht. Die Gelenkkugel wird in Lagerteilen frei drehbar gehalten. Durch einen am Steuerknüppel angeordneten Magneten werden Hall-Sensoren angewählt. Realisiert wird damit allerdings nur der aus der Arbeit mit dem Personalcomputer bekannte Joystick.

Ein Joystick ist in der US-4 748 441 offenbart. Er weist ein Gehäuse auf, das eine Kugel und Schaltkontakte umschließt Mit der Kugel ist ein Hohlstab verbunden, in dem eine weitere Kugel und weitere Schaltkontakte angeordnet sind und der sich in dem Gehäuse bewegen läßt.

Moderne Personenkraftwagen sind in der Regel mit einem Bordcomputer ausgestattet. Durch eine Drucktastenbetätigung am Scheibenwischer- und Anlagenbetätigungshebel können Uhrzeit, Außentemperatur mit Glatteisvorwarnung, durchschnittlicher Benzinverbrauch, momentaner Benzinverbrauch, momentane Tankfüllung, mögliche Reichweite mit dieser Tankfüllung in km und Stopp-Uhr abgerufen bzw. bedient und auf einem Display im Armaturenbrett angezeigt werden. Desweiteren können Radiosender von der einen Seite des Lenkrades aus gesucht und von der anderen Seite deren Lautstärke eingestellt werden.

Nachteilig ist, daß für diese Funktionen drei Tastaturen getrennt bedient werden müssen, die die Aufmerksamkeit des Autofahrers beanspruchen und dadurch den Steuer- und Lenkvorgang des Fahrzeuges negativ beeinflussen können. Hierdurch kann sich das Unfallrisiko erhöhen.

Es stellt sich demnach die Aufgabe, eine Vorrichtung zur Erzeugung von Anwahlstellungen, insbesondere zur Anwahl eines Fahrzeug-Bordcomputers, einer Waschmaschinen-Steuerung, einer Fahrpedaleinrichtung oder dergleichen anzugeben, die leicht zu bedienen ist, deren Endlagen weitgehend frei von mechanischem Verschleiß sicher ein- und aufnehmen sind, und die sich einfach, insbesondere für die jeweiligen Einsatzbedingungen, anpassen läßt.

Erfindungsgemäß wird diese Aufgabe durch die Merkmale des Anspruchs 1 gelöst.

Die mit der Erfindung erzielten Vorteile bestehen insbesondere darin, daß durch ein magnetisches "Einrasten" ein verschleißfreier Betrieb der Stellungsanwahleinheit gegenüber der Stellungsgebereinheit gegeben ist. Die Bewegungsrichtung der Stellungsanwahleinheit gegenüber der Stellungsgebereinheit kann vielmehr beliebig sein. Hierdurch wird eine Zerstörung bzw. Beschädigung des Rastwerks vermieden.

Die besondere Ausgestaltung der Stellungsgeber- und der Stellungsanwahleinheit(en) erlauben eine weitestgehende Miniaturisierung des Rastwerks. Diese Miniaturisierung trägt beengten Platzverhältnissen, wie sie insbesondere im Cockpit von Fahrzeugen, Flugzeugen, aber auch von Waschmaschinen ganz einfach gegeben sind, Rechnung. Die Stellungen werden kontaktlos und störungsfrei abgefragt und als elektrische Signale für eine weitere Verarbeitung zur Verfügung gestellt.

Am zweiten zylinderförmigen Drehkörper kann ein Fingerkörper vorgespannt gehalten werden. Es kann eine zweite Stellungsanwahleinheit vorgesehen sein, die eine Ausnehmung aufweist, durch die der Fingerkörper zu führen ist. Es kann eine zweite Stellungsabgabeeinheit vorgesehen sein, die wenigstens ein zweites Stellungserfassungselement aufweist. Die Stellungsgebereinheit kann dann weiterhin entlang der Längsachse mit dem Fingerkörper in der Ausnehmung verschoben werden und dabei der zweite Drehkörper wenigstens teilweise auf der zweiten Stellungsanwahleinheit aufgesetzt werden und diese Stellung durch das zweite Stellungserfassungselement erfaßt werden.

Ergänzt wird also bei der Verstellbarkeit des Rastwerkes die Drehbewegung durch eine Tipp-Bewegung. Hierdurch können die bei der Drehbewegung eingenommenen Stellungen quittiert werden. Auch diese Quittierbewegung wird kontaktlos und störungsfrei abgefragt und als ein weiteres elektrisches Signal zur Verfügung gestellt.

Eine dritte Stellungsanwahleinheit kann einen Basiskörper aufweisen, dem eine quer zur Längsachse liegende Ebene zugeordnet werden kann, auf deren der ersten Stellungsabgabeeinheit zugewandten Oberfläche wenigstens ein erster Permanentmagnet angeordnet sein kann, wobei dem ersten Permanentmagneten wenigstens teilweise gegenüberliegend unterhalb der zweiten Stellungsabgabeeinheit ein zweiter Permanentmagnet angeordnet sein kann. Es kann eine dritte Stellungsabgabeeinheit mit wenigstens einem dritten Stellungserfassungselement vorgesehen werden. Die Stellungsgebereinheit kann über die zweite Stellungsanwahleinheit gegenüber dem Basiskörper zweidimensional mit einer Verfahreinrichtung verfahren werden und diese Stellung durch die dritten Stellenerfassungselemente erfaßt werden.

Nachgebildet wird eine komfortable "Maus", wie sie aus der Bedienung des Personal-Computers bekannt ist. Es werden zweidimensionale Stellungsänderungen ermöglicht, wie sie für das Verfahren des Cursors am Bildschirm eingesetzt werden kann. Die Drehbewegung um die Achse der Stellungsgebereinheit erlaubt es, unterschiedliche Programme aufzurufen. Mit Hilfe der Tippbewegung in Längsrichtung der Achse der Stellungsgebereinheit sind bestimmte Daten oder auch Teile von Daten anwählbar. Diese komfortablere Lösung ist hervorragend für die Bedienung durch Blinde einzusetzen. Die fühlsamen Stellungsänderungen bei der Drehung um die Achse, das Tasten in Richtung der Achse und das Verschieben in zwei Ebenen gestattet es, auch ohne Sehen bzw. Hinsehen die jeweiligen Stellungen sicher einzunehmen.

Als vierte Stellungsanwahleinheit kann eine Kippgehäuseeinheit vorgesehen werden, in der wenigstens ein Einzelgebermagnet angeordnet ist und die mit wenigstens einem Einzelgebermagnet versehene Stellungsgebereinheit kardanisch gehalten ist. Es kann eine vierte Stellungsabgabeeinheit mit wenigstens einem vierten Stellungserfassungselement vorgesehen werden, wobei die Stellungsgebereinheit gegenüber der Kippgehäuseeinheit verstellt werden kann und diese Stellung durch die vierten Stellungserfassungselemente erfaßt werden kann.

Die Drehbewegung um die Achse der Stellungsgebereinheit wird durch eine joystickähnliche Funktion ergänzt. Auch diese Stellungen werden störungsfrei abgefragt und als elektriches Signal für eine weitere Verarbeitung zur Verfügung gestellt.

Auch diese komfortable Vorrichtung läßt sich hervorragend als Bedienungsteil für Personal-Computer für Blinde einsetzen, da sämtliche einzunehmenden Endstellungen bei der Verstellung erfühlt werden können und so ohne ein Sehen bzw. Hinsehen vorzunehmen sind.

Durch die in den weteren Unteransprüchen aufgeführten Maßnahmen sind vorteilhafte Weiterbildungen und Verbesserungen der in Anspruch 1 angegebenen Vorrichtung zur Erzeugung von Anwahlstellungen möglich.

Die Erfindung wird nachstehend anhand der Zeichnung näher erläutert. Es zeigen:

Fig. 1a bis 1d      Längsschnitte durch ein Rastwerk in einem unterschiedlichen modulartigen Aufbau,

Fig. 2      einen Schnitt durch ein Rastwerk gemäß Fig. 1a entlang der Linie II - II,

Fig. 3a      und 3b einen Teilausschnitt aus Fig. 2,

Fig. 4a      eine Stellungsgebereinheit eines Rastwerks gemäß den Fig. 1a bis 1d in einer schematisch dargestellten Draufsicht,

Fig. 4b      eine Stellungsgebereinheit gemäß Fig. 4a in einem schematisch dargestelltem Längsschnitt,

Fig. 5a      einen Basis-Körper eines Rastwerks gemäß Fig. 1a,

Fig. 5b      eine Draufsicht auf einen Basiskörper gemäß Fig. 5a,

Fig. 6 und 7      als intelligente Drehknöpfe ausgebildete Rastwerke in einem schematisch dargestellten Längsschnitt,

Fig. 8      eine maßstäbliche Wiedergabe der in den Fig. 6 und 7 dargestellten intelligenten Drehknöpfe,

Fig. 9      eine erste kardanische Anordnung eines Rastwerkes gemäß den Fig. 1a bis 4b in einer Gehäuseeinheit in einer schematisch dargestellten Schnittdarstellung,

Fig. 10      eine kardanische Anordnung eines Rastwerks gemäß Fig. 9 entlang der Linie X - X,

Fig. 11      eine zweite kardanische Anordnung eines Rastwerks gemäß den Fig. 1a bis 1b in einer Gehäuseeinheit in einer schematisch dargestellten Schnittdarstellung und

Fig. 12      einen Schnitt durch eine kardanische Anordnung eines Rastwerkes gemäß Fig. 11 entlang der Linie XII -XII.

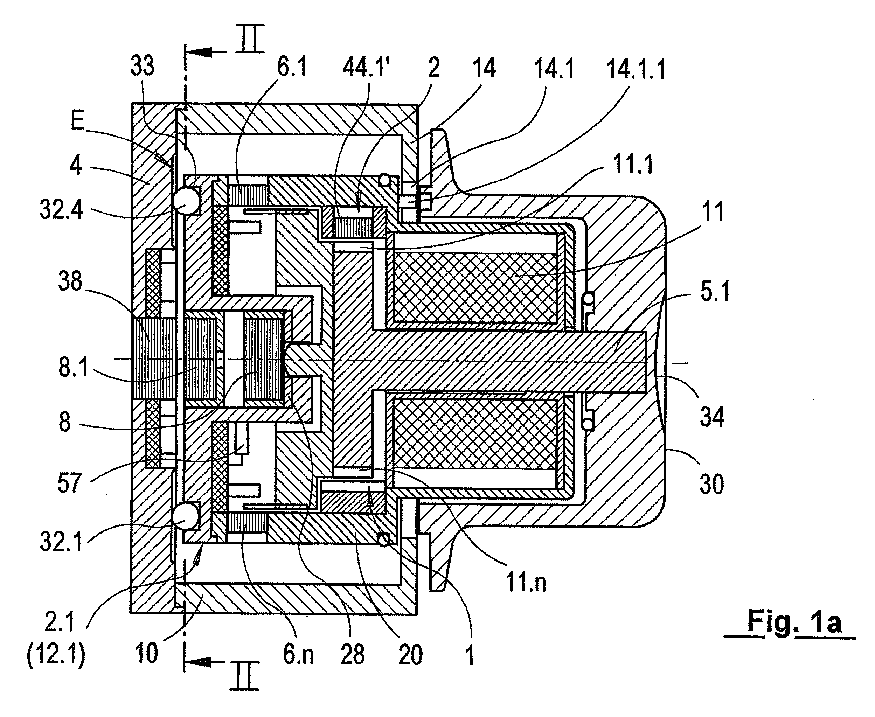

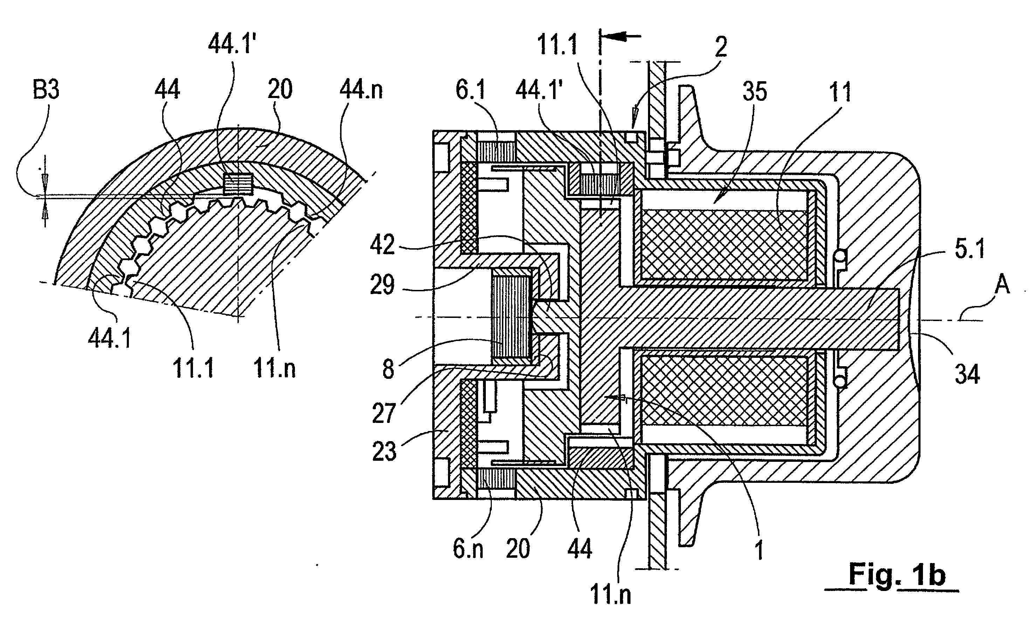

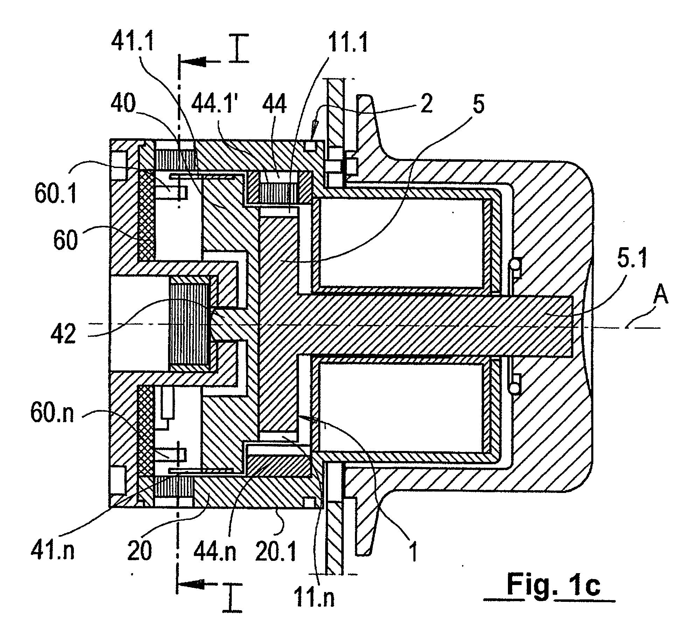

Die Fig. 1a, 1b und 1c machen deutlich, daß eine Vorrichtung zur Erzeugung von Anwahlstellungen, insbesondere eines Fahrzeug-Bordcomputers, einer Waschmaschine oder dgl., im folgenden Rastwerk genannt, modulartig ausgebildet ist.

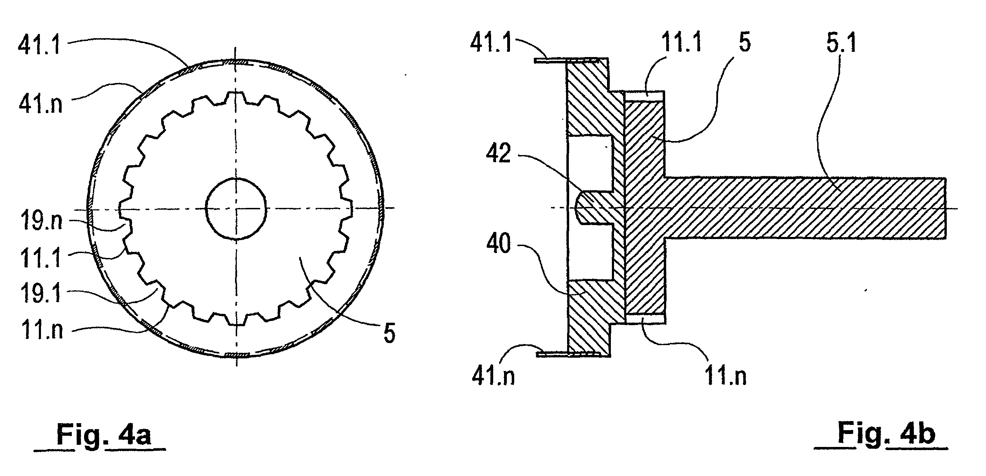

Die funktionell einfachste Form des Rastwerks ist in Fig. 1c dargestellt. Sie weist als Stellungsgebereinheit 1 einen Drehkörper 5 mit einer angeformten Welle 5.1 auf. Der Drehkörper 5 ist mit Stellungsgeberzähnen 11.1, ... 11.n in Form eines peripher angeordneten, radial nach außen herausragenden Vorsprüngen versehen. Diese sind trapezförmig, vgl. auch Fig. 4a und 4b, ausgebildet. Zwischen den Zähnen liegen entsprechend geformte Stellungzahnlücken 19.1, ... 19.n. Hierdurch bildet sich ein Impulsrad aus.

Der Drehkörper 5 geht in einen weiteren Drehkörper 40 mit einem größeren Außendurchmesser über, an dem ein nach außen herausragendes Ringsegment angeformt ist. Es trägt Stellungsgeberelemente 41.1, ... 41.n. Die Stellungsgeberelemente sind als Metallfahnen ausgebildet, zwischen denen eine Lücke mit gleicher Breite wie die der Metallfahnen sich befindet.

Um die Stellungsgebereinheit 1 ist eine Stellungsanwahleinheit 2 angeordnet. Hierbei ist das Impulsrad, d. h. der Drehkörper 5 mit den als Verzahnung ausgebildeten Stellungsgeberzähnen 11.1, ... 11.n ist von einem Zahnkranz 44 umgeben, der am zylindrischen Mantel 20.1 eines inneren Gehäuses 20 gehalten ist. Der Zahnkranz 44 ist innenverzahnt und weist wenigstens einen Zahn 44.1,...44.n auf. Zwischen den gleich ausgebildeten Zähnen befinden sich ebenfalls gleich ausgebildete Zahnlücken. Zwischen den Stellungsgeberzähnen 11.1, ... 11.n und den Zähnen 44.1, ..., 44.n befindet sich hier ein Abstand B3 (vgl., Detaildarstellung in Fig. 1b).

Im Zahnkranz 44 sind wenigstens teilweise in gleichem Abstand untereinander beabstandete Magnetkörper 44.1', ... 44.n' angeordnet. Sie können auch auf dem Umfang des zylindrischen Mantels 20.1 angeordnet werden. Im Ergebnis von Versuchen wurde festgestellt, daß vier gleichmäßig auf dem Umfang verteilte Dauermagnetkörper 44.1', ... am effektivsten sind.

Wie in Fig. 1a und Fig. 1b gezeigt, ist im inneren Gehäuse 20 gegenüber dem Drehkörper 5 und um die sich daran anschließenden Welle 5.1 eine Spule 11 angeordnet. Diese Spule magnetisiert die Stellungsgeberzähne auf, die sich dann wie Einzelmagneten verhalten.

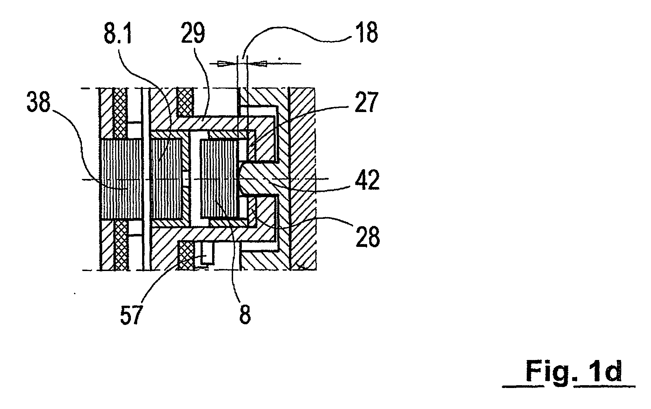

Wie insbesondere Fig. 1b und 4b zeigen, ist die Welle 5.1 durch einen Finger 42 verlängert, der in einer Ausnehmung gehalten ist, die aus einem Hülsenelement 27 des inneren Gehäuses 20 ausgeformt ist. Wie insbesondere Fig. 1b und 1d zeigen, schließt im Bereich des Fingers 42 ein Boden dieses Hülsenelements 27 mit einem Körper 28 aus einem magnetisch leitenden Material ab. Das magnetisch leitende Material kann Stahl, Eisen, feinstgefüllter Kunststoff oder dergleichen sein. Unter dem Körper 28 ist ein Permanent- Tippschaltmagnet 8 angebracht, der bedingt durch seine Magnetkraft ständig an dem Körper 28 anliegt, so daß der Finger immer bis zu der Ebene angehoben wird, die zwischen dem Körper 28 und dem Permanent-Tippschaltmagneten liegt.

Für die als Einzelmagnete wirkenden Stellungsgeberzähne 11.1, ..., 11.n, die Dauermagnetkörper 44'.1, ... und die Zähne 44.1, ... 44.n ergibt sich jeweils eine Anzugskraft F

nach folgender Beziehung:

$$F = \frac{B^2 \times A}{\mu 0}$$

Hierbei sind

A = Gesamtquerschnitt des Luftspalts, der durch den wechselnden Abstand B3 zwischen den Zahnoberflächen und den Zahnlücken gebildet wird,
B = die Luftspaltinduktion
$\mu 0$ = die Induktionskonstante.

Diese Beziehung gilt analog für den Permanent-Tippschaltmagneten 8, der mit einem veränderlichen Abstand 18 als Luftspalt gegenüber dem Körper 28 positioniert ist.

Durch das Tippen der Stellungsgebereinheit 1 entlang einer Längsachse A löst sich der Tippschaltmagnet 8 vom Körper 28. Hierbei muß eine Kraft, wie sie ähnlich von einer vorgespannten Feder ausgeht, überwunden werden. Wird auf die Stellungsgebereinheit 1 eine Drehbewegung um die Längsachse A übertragen, bewegen sich die Stellungsgeberzähne 11.1, ... 11.n wie Einzelmagnete jeweils über die Zähne 44.1, ... 44.n sowie über die vier Dauermagnetkörper 44'.1, ... . Durch die Veränderung des Abstandes B3 verändert sich wechselseitig der Gesamtquerschnitt des Luftspaltes und damit die Anzugskraft der Einzelmagneten.

Da die Einzelmagneten gleichmäßig auf dem zylinderförmig ausgebildeten Drehkörper als magnetisierte Stellungsgeberzähne 11.1, ... verteilt sind, wird immer die gleiche Stellung gegenüber einem Zahn 44.1, ... bzw. einem der Dauermagnete 44'.1, ... eingenommen. Da die Anzugskraft der Einzelmagneten, d. h. der Stellungsgeberzähne 11.1, ... gegenüber den Zähnen 44.1, ... am größten ist, "rastet" die Stellungsgebereinheit 1 gegenüber der Stellungsanwahleinheit 2 jeweils in eine fixierte "Raststellung" ein.

Ein Herausbewegen aus dieser Raststellung in eine andere Stellung ist nur durch eine Überwindung der vielfach vorhandenen Anzugskraft möglich. Dadurch, daß die Stellungsgeberzähne 11.1, ... genauso breit sind wie die Zähne 44.1, ..., ist eine genaue Fixierung der Raststellung gegeben.

Von besonderem Vorteil ist darüber hinaus, daß das Einrasten verschleißfrei erfolgt. Unerheblich ist dabei, ob die Stellungsgebereinheit 1 im Uhrzeigersinn oder entgegen dem Uhrzeigersinn bewegt wird, denn es sind keine mechanischen Teile vorhanden, die eine zwangsweise vorgeschriebene Drehbewegung erfordern und bei denen jede anders vorgenommene Drehbewegung zu deren Beschädigung bzw. Zerstörung führen kann.

Ist eine Raststellung eingenommen worden, wird durch Betätigen des Tippschaltmagneten 8 eine weitere Fixierung dieser Raststellung vorgenommen. Diese Fixierung ist vor allem dann von Vorteil, wenn das Rastwerk für eine Quittierung einer Vorwahl eingesetzt wird.

Wird die Stromversorgung der Spule 11 gestört oder ist diese defekt, sorgen die vier Dauermagnetkörper 44'.1, ... dafür, daß ebenfalls genau fixierte Raststellungen eingenommen werden, auch wenn die Anzugskraft F nicht mehr so stark ist. Das Rastwerk verhält sich nicht mehr so wie in Fig. 1a und 1b figürlich dargestellt, sondern als funktionell einfachste Form wie in Fig. 1c gezeigt.

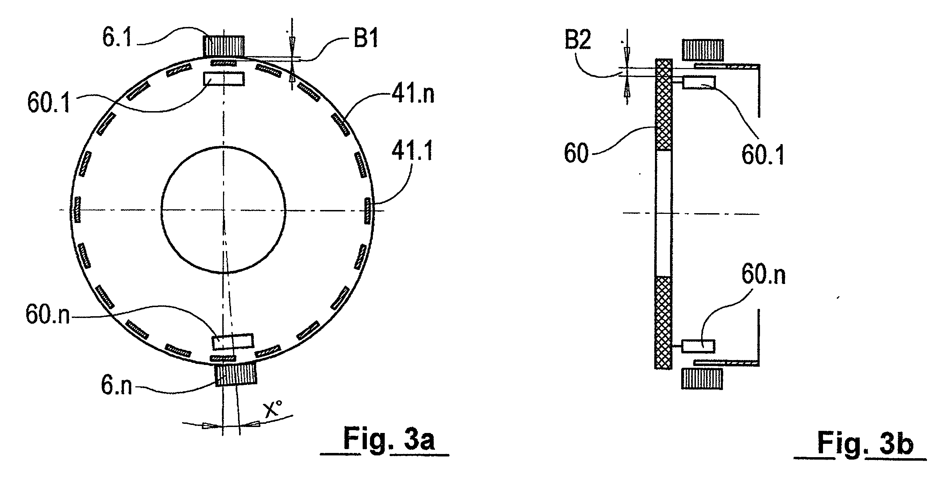

Durch das Gehäuse 20 werden Magneteinheiten, die als Dauermagneteinheiten 6.1, ... 6.n ausgebildet sind und die in etwa die gleiche Breite haben und untereinander in gleichen Abstand angeordnet sind, gehalten. Ihnen liegen auf einer Scheibe 60 ebenfalls beabstandet untereinander Hall-Elemente 60.1, ... 60.n beabstandet gegenüber. Zwischen den Dauermagneten 6.1, ... und den Hall-Elementen 60.1, ... bewegen sich die mit 41.1, ... 41.n bezeichneten Stellungsgeberelemente, deren Stellung in den Hall-Elementen 60.1, ... in ein elektrisches Signal zur weiteren Verarbeitung umgeformt wird. . Die Hall-Elemente 60.1, ... sind gegenüber den Stellungsgeberelementen 41.1, ... in einem Abstand B2 gehalten. Wie sich die Elemente gegenüberliegen, ist aus den Fig. 3a und 3b ersichtlich.

Durch das Verdrehen und die mögliche Absenkung des Drehgriffes 14 werden die Stellungsgeberelemente 41.1, ... zwischen den Dauermagneteinheiten 6.1, ... und Hall-Elementen 60.1, ... bewegt.

Dem Permanent-Tippschaltmagnet 8 liegt ein Hall-Element 57 gegenüber (vgl. Fig. 1 a), das dessen Bewegungsänderungen ebenfalls erfaßt und in ein weiteres Signal zur Verarbeitung umwandelt.

Gegenüber dem in Fig. 1b dargestellten und beschriebenen Rastwerk ist das in Fig. 1a gezeigte um einen Basiskörper 4 bzw. um einen Magnethaltekörper 90 ergänzt. Diese liegen wenigstens teilweise an einem äußeren Gehäuse 10 an, das das innere Gehäuse 20 umgibt und das auch in Fig. 1b und 1c nur andeutungsweise gezeigt ist.

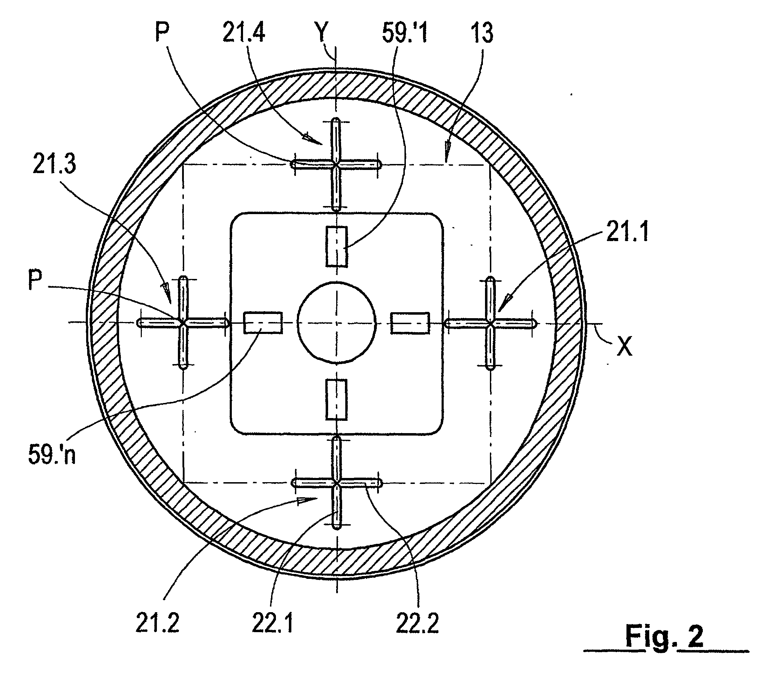

Für diese Weiterausbildung des Rastwerkes gemäß Fig. 1b mit dem Basiskörper 4 ist das innere Gehäuse 20 mit einer Wandung 23 abgeschlossen, in der in gleichem Abstand vier Führungselemente in Form von Kugeln 32.1, ... 32.4 in Vertiefungen 33 gehalten werden. In der Mitte der Vertiefungen ist ein Permanentmagnet 8.1 gehalten. In Fig. 2 ist der Basiskörper in Zusammenhang mit anderen Elementen des Rastwerkes in einer Draufsicht gezeigt. Auf seiner Oberfläche 13 sind sich gegenüberliegend vier Kreuzanordnungen 21.1, 21.2, 21.3 und 21.4 eingebracht. Diese bestehen aus wenigstens zwei gleichlangen und sich in der Mitte in einem Schnittpunkt P kreuzenden Rillen 22.1, 22.2. Möglich ist darüber hinaus, weitere sich kreuzende Rillen in den Kreuzungsanordnungen 21.1, ... vorzusehen. In Fig. 2 sind außer den stark gezeichneten sich kreuzenden Rillen 22.1, 22.2 zwei weitere um 45° und rechtwinklig zueinander liegende weitere Rillen angedeutet. Die Vielzahl der sich kreuzenden Rillen erhöht die Freiheitsgrade der als Kugeln ausgebildeten Führungselemente 32.1, 32.2. Auf der Oberfläche 13 sind auch Hall-Elemente 59'.1, ... 59'.n angeordnet, die die Bewegung des Permanentmagneten 8.1 erfassen und in ein elektrisches Signal zur Weiterverarbeiten umformen.

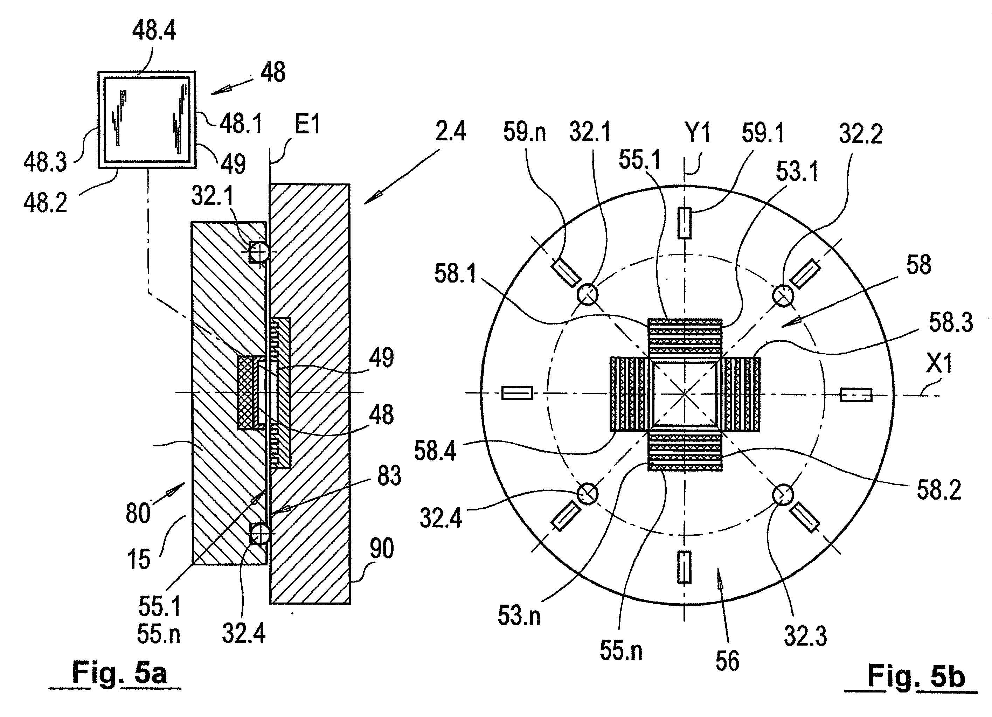

Kommt ein Magnethaltekörper 80 zum Einsatz, wird der Boden des inneren Gehäuses 20 um eine Konfiguration ergänzt, wie sie in Fig. 5a gezeigt ist. Und zwar wird das innere Gehäuse durch den Magnethaltekörper 80 abgeschlossen dem der Magnethaltekörper 90 gegenüberliegt, der eine Konfiguration aufweist, wie er in Fig. 5b gezeigt wird. In der Mitte des Magnethaltekörpers 90 ist eine einem Havelberger Kreuz ähnliche Permanentmagnet-Anordnung 58 eingelassen.

Diese besteht aus einem in der Mitte angeordneten, im wesentlichen quadratischen Magnetkörper, der auf der Innenfläche des Magnethaltekörpers 90 kreuzförmig in vier Permanentmagnete 58.1, ... 58.4 übergeht. Jeder der Permanentmagnete 58.1, ... weist eine waschbrettähnliche Konfiguration auf, wobei parallel zueinander längliche Zähne 55.1, ... 55.n in deren Oberflächen eingebracht sind. Die Zähne haben eine im Querschnitt viereckige Konfiguration, so daß auch die Ausnehmung eckig ausgebildet ist. Die kreuzförmig ausgebildete Permanentmagnetanordnung 58 kann nicht nur aus einem Magneten bestehen, sondern kann derart hergestellt sein, daß der viereckige Kern ein Permanentmagnet ist und die darum liegenden mit 58.1, 58.,2, 58.3 und 58.4 bezeichneten Kreuzbalken aus einem magnetisch leitenden Material, insbesondere Eisen hergestellt sind.

In der Ruhestellung liegt dem viereckigen Kernmagneten der Permanentmagnet-Anordnung in dem Haltekörper 8 ein Permanentmagnet 48 gleicher Konfiguration gegenüber. Dieser ist als Auszug in Fig. 5a im Detail dargestellt. Er besteht aus einer quadratischen Fläche, die an ihren Seitenkanten 48.1, 48.2, 48.3 und 48.4 jeweils durch eine Wand begrenzt ist. Diese Wand ragt über das Niveau der Fläche des Permanentmagneten hinaus. Der Magnethaltekörper 80 weist eine Innenfläche 83 auf, die auf einer Ebene E1 liegt. Im Ruhezustand liegt die glatte Innenfläche 83 der bereits beschriebenen Verzahnung 55.1, ..., 55.n gegenüber. In der mit 56 bezeichneten Innenfläche sind Hall-Elemente 59.1, ... 59.n angeordnet, die veränderte Stellungen des Permanentmagneten 8.1 erfassen und sie in ein elektrisches Signal zur Weiterverarbeitung umformen.

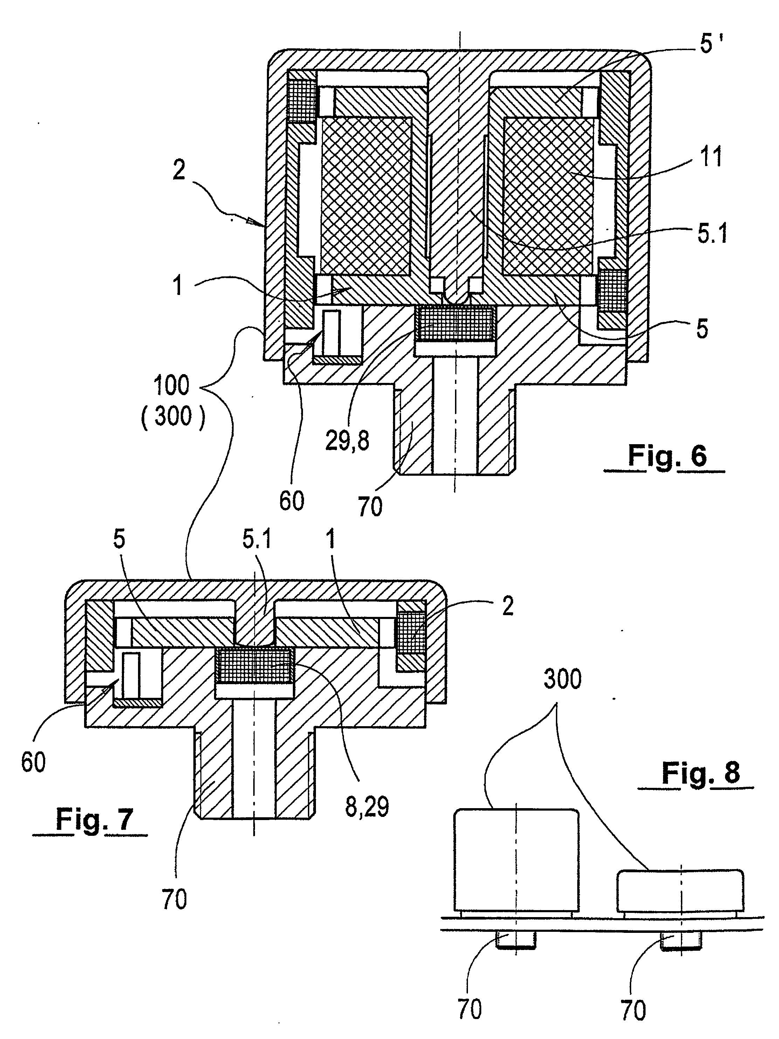

In den Fig. 6 und 7 ist ein Rastwerk in Gestalt eines "intelligenten" Drehknopfes dargestellt. Hierbei liegt dem Drehkörper 5 ein weiterer Drehkörper 5' mit einer Außenverzahnung wie der des Drehkörpers 5 gegenüber, zwischen denen die Spule 11 angeordnet ist. Die Welle mit dem daran anliegenden Finger liegt der bereits beschriebenen Anordnung des Permanent-Tippschaltmagneten 8 gegenüber. Die Welle geht nahtlos in ein Gehäuse 100 über, das zugleich der Drehknopf und damit die Stellungsgebereinheit 1 ist. Die Dauermagneten sind um 45° schräg gegenüberliegend in den außen angeordneten Außenverzahnungen untergebracht. Die Aufnahme der jeweiligen Raststellungen wird in gleicher Art und Weise mit Hilfe der bereits beschriebenen Anstellungswahleinheit vorgenommen.

Die Bauhöhe eines solchen Rastwerkes kann, wie Fig. 7 zeigt, wesentlich reduziert werden. Das den aktiven Teil des Rastwerks umgebende Gehäuse 100 ist wesentlich flacher gestaltet werden als das in Fig. 6 gezeigte. Möglich ist das, weil das Gehäuse 100 zugleich Betätigungsknopf 300 ist und mit den bei Drehknöpfen üblichen haftungserhöhenden Strukturen in Form von Rillen oder dgl. versehen werden kann.

In Fig. 8 sind die als intelligente Drehknöpfe ausgebildeten Rastwerke maßstäblich dargestellt. Mit seinem Einschraubstutzen 70 kann dieses Rastwerk direkt in einer Frontplatte festgeschraubt werden. Das in Fig. 6 dargestellte Rastwerk überragt dabei die Montageplatte um 3 cm, während das in Fig. 7 gezeigte diese nur um 1,3 cm überragt. Hierdurch läßt sich der intelligente Drehknopf im Display des Fahrzeuges oder sogar in dessen Lenkrad auf einfache Art und Weise integrieren.

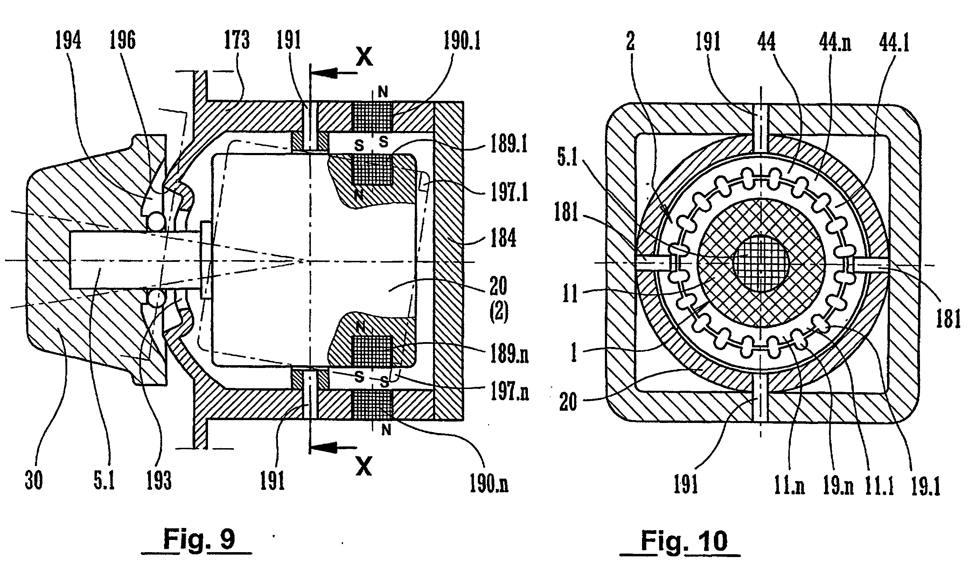

In den Fig. 9 und 10 bzw. 11 und 12 ist ein Rastwerk, im Umfang, wie es in Fig. 1b dargestellt ist, als Weiterbildung kardanisch angeordnet.

Die Welle 5.1 ragt dabei einendig aus einer Kippgehäuseeinheit 173, 184 bzw. 273, 284 heraus und ist mit einem Betätigungsknopf 30 versehen.

Die Kippgehäuseeinheit weist ein Kippgehäuse 173 bzw. 273 auf, in dem das Gehäuse 20, das die Stellungsanwahleinheit 2 umfaßt, über zwei sich gegenüberliegende Teilwellen 181, 191 bzw. 281, 291 drehbar gehalten wird. Hierdurch ergibt sich die kardanische Aufhängung des in Fig. 1b gezeigten Rastwerkes gemäß Fig. 1b. Teile dieses Rastwerkes sind als schematische Schnittdarstellung insbesondere in den Fig. 10 und 12 wie die Stellungsgebereinheit 1 mit den Stellungsgeberzähnen 11.1, ... 11.n und den dazwischenliegenden Stellungsgeberzahnlücken 19.1, ... 19.n sowie die Spule 11, die um die Welle 5.1 gelegt ist, gezeigt. Gezeigt ist darüber hinaus die Stellungsanwahleinheit 2 mit dem Zahnkranz 44 mit dessen Zähnen 44.1, ... 44.n, der vom inneren Gehäuse 20 umgeben ist.

Das Kippgehäuse 173 bzw. 273 ist ein im Querschnitt quadratisch ausgebildeter Hohlkörper. Dieser Hohlkörper ist einendig mit einem umlaufenden Gehäusesphärenring 193, 293 verschlossen, der zum Zentrum des Verschlusses in einen scheibenförmigen Verschlußkörper übergeht, durch den die Welle 5.1 hindurchragt.

Der Betätigungsknopf 30 weist an seinem zum Kippgehäuse 173 bzw. 273 zeigenden Ende Stellungsknopfsphärenausnehmungen 194, 294 auf, die zum Gehäusesphärenring 193 bzw. 293 kompatibel sind. Hierdurch läßt sich der Betätigungsknopf 30 gleitend auf dem Kippgehäuse 173 bzw. 273 bewegen.

Das Kippgehäuse 173 bzw. 273 ist am anderen offenen Ende mit einem Deckel 184 bzw. 284 verschlossen.

Im Kippgehäuse 173 gemäß Fig. 9 sind in dessen gegenüberliegenden Wandungen Einzelgebermagnete 190.1, ... 190.n angeordnet. Hierdurch nimmt das Kippgehäuse 173 die Funktion einer weiteren Stellungsgebereinheit ein.

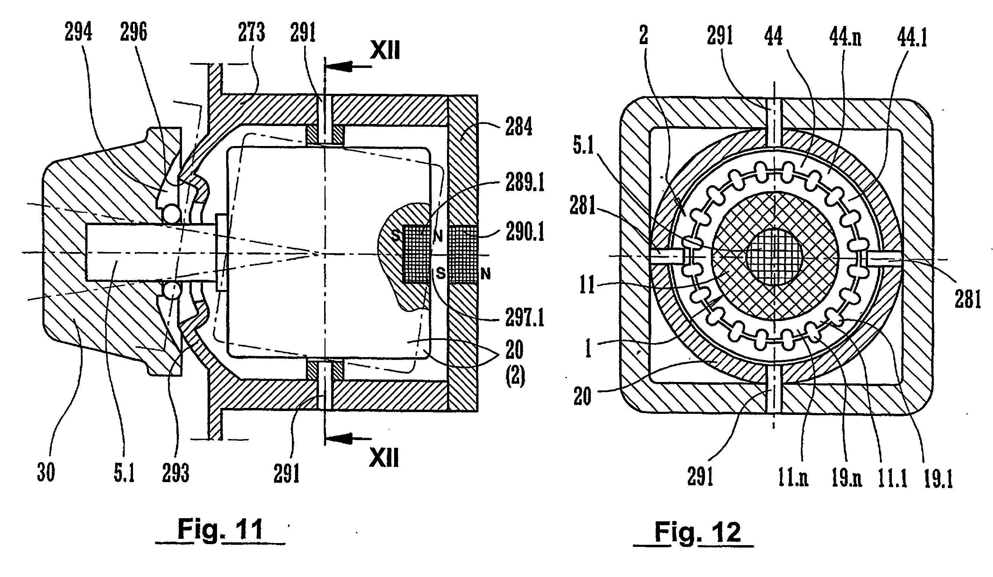

Bei dem in Fig. 11 dargestellten Kippgehäuse hingegen ist ein Einzelgebermagnet 290.1 im Deckel 284 angeordnet. Hierdurch nimmt das Kippgehäuse 273 zusammen mit dem Deckel 284 die Funktion der weiteren Stellungsgebereinheit ein.

Die Stellungsgebermagnete 190.1, ... bzw. 290.1 sind gegenüber Einzelmagneten 180.1, ... 180.n bzw. 280.1, die im inneren Gehäuse 20 angeordnet sind, um einen sich verändernden Abstand beabstandet. Die Einzelmagnete und die Einzelgebermagnete können als Dauer- oder Elektromagnete realisiert sein.

In das Gehäuse 20 gemäß Fig. 9 sind außer den Einzelmagneten 189.1, ... Hall-Elemente 197.1, ... 197.n angeordnet. Diese nehmen genau und störungsfrei die Stellungsveränderungen des Gehäuses 20 auf.

In Fig. 11 ist ein Hall-Element 297.1 im Bereich des Einzelmagneten 289.1 angeordnet. Auch diese gibt die Stellungsänderung des Einzelmagnetes 289.1 gegenüber dem Einzelgebermagnet 290.n durch eine veränderte Bewegung des Gehäuses 20 als elektrisches Signal zur weiteren Verarbeitung wieder.

Durch die besondere Anordnung der Magneten und deren Polungen ist es möglich, daß das innere Gehäuse 20 immer eine definierte End- bzw. Nullstellung einnimmt. Die kardanische Aufhängung ermöglicht eine joystickähnliche Bewegung über den Betätigungsknopf 30.

Die Arbeitsweise eines Rastwerks, wie es in Fig. 1a dargestellt ist, wird im folgenden erläutert.

Durch eine Bewegung des Betätigungsknopfes 30 in X- oder Y-Richtung bewegen sich die als Kugeln ausgebildeten Führungselemente 32.1, ... 32.4 in den Rillen 22.1, 22.2 der Kreuzanordnungen 21.1, ... 21.4. Hierdurch wird eine Stellung ähnlich einer Joystickfunktion erzielt. Die eingenommene Stellung wird durch die veränderte Stellung des Permanentmagneten 8.1 gegenüber einem der Hall-Elemente 59.1, ..., 59.n erfaßt und als elektrisches Signal an den Computer ausgegeben. Durch diese Bewegung wird eine "Programmsenderwahl Radiosender" angewählt und auf dem Display angezeigt.

Danach wird der Betätigungsknopf 30 gedreht, so daß sich die Stellungsgebereinheit 1 an der Welle um die Achse A verdreht. Stehen sich hierbei die Stellungsgeberzähne der Stellungsgebereinheit 1 den Zähnen der Stellungsanwahleinheit gegenüber, sorgt die Anzugskraft F dafür, daß der Drehkörper 5 in der bestehenden Stellung verharrt. Hierdurch ist es möglich, schrittweise die einzelnen Sender im Sendebereich anzuwählen und sie mit Hilfe der Hall-Elemente 60.1, ... auf den Display mit Angabe der Frequenz und der Sender-Bezeichnung aufzurufen.

Von besonderem Interesse sind für den Autofahrer die Sender, die Verkehrsmeldungen über Staus, Glatteis oder sonstige Gefahren ansagen. Insbesondere im Übergangsbereich zwischen zwei Sendern ist eine direkte Vorwahl des Senders, in dessen Sendebereich eingefahren wird, von Bedeutung.

Dieser aufgerufene Sender wird durch ein Drücken des Betätigungsknopfes 30 in Richtung der mit A bezeichneten Achse angewählt. Hierbei wird durch den Finger 42 der PermanentTippschaltmagnet 8 von dem magnetisch leitenden Körper 28 getrennt. Diese Tippschaltbewegung wird durch das Spiel, das der Drehkörper 40 hat, begrenzt. Die veränderte Stellung des Tippschaltmagneten 8 wird durch das Hall-Element 58 erfaßt. Das abgegebene elektrische Signal wird als Quittierungssignal vom Rechnerprogramm gedeutet, so daß der voreingewählte Sender fest eingestellt wird.

Wird der Betätigungsdruck vom Betätigungsknopf 30 genommen, zieht sich der Permanent-Tippschaltmagnet 8 wieder an den magnetisch leitenden Körper 28 heran und drückt die Stellungsgebereinheit 1 in ihre Ursprungsstellung zurück. Die Konfiguration Permanent-Tippschaltmagnet und magnetisch leitender Körper 28 ersetzt die Funktion einer mechanischen Feder. Von Vorteil ist, daß es hier zu keinem Federbruch bzw. sonstigen Ausfallerscheinungen dieses Rückholelementes kommen kann.

Das Loslassen des Betätigungsknopfes bewirkt darüber hinaus, daß der Permanentmagnet 8.1 wieder über den Permanentmagneten 38 rutscht und so eine Grundstellung einnimmt. Die Stellungsgebereinheit 1 hingegen behält ihre Raststellung, so daß bei einer Löschung der Sendervorwahl durch eine Sendestörung oder dergleichen dieser wieder durch ein einfaches Vorbewegen des Stellknopfes 30 und nochmaliges Quittieren nachträglich wiederum eingestellt werden kann.

Durch eine weitere Bewegung des Betätigungsknopfes 30 in eine andere X- oder Y-Richtung ist ein weiteres Grundprogramm einzustellen, in dessen Adressen, die am Display angezeigt werden, durch eine Drehbewegung um die Achse A geblättert und danach durch ein Drücken des Betätigungsknopfes in Richtung der Achse A eine Quittierung bzw. ein Aufruf der gefundenen Adresse erfolgen kann. Diese Adresse wird nicht nur am Display angezeigt, sondern kann nach dem Anwählen durch das Quittieren einer Arbeitsfunktion, wie z. B. Einstellen einer konstanten Geschwindigkeit, realisiert werden.

Von besonderem Vorteil ist, daß das beschriebene Rastwerk sich in einer Größe realisieren läßt, wie sie in Fig. 8 dargestellt ist. Damit läßt es sich selbst bei beengtesten Platzverhältnissen unterbringen.

**Patentansprüche**

1. Vorrichtung zur Erzeugung von Anwahlstellungen, insbesondere zur Anwahl eines Fahrzeug-Bordcomputers, einer Waschmaschinen-Steuerung oder dergleichen, die aufweist,

   - eine Stellungsgebereinheit (1), die aus einer Welle (5.1) besteht, an der wenigstens ein erster zylinderförmiger Drehkörper (5, 5') angeordnet ist,

   wobei der erste Drehkörper (5, 5') mit einer Außenverzahnung versehen ist, bei der peripher radial nach außen zeigende Stellungsgeberzähne (11.1, ... 11.n) mit dazwischenliegenden Stellungsgeberzahnlücken (19.1, ... 19.n) angeordnet sind, und

   wobei dem ersten Drehkörper (5, 5') eine Magnetisierungseinheit (11) zugeordnet ist, und

   - eine wenigstens teilweise koaxial um den ersten Drehkörper (5, 5') der Stellungsgebereinheit (1) angeordnete erste Stellungsanwahleinheit (2), die aus einem Zahnkranz (44) besteht, der mit einer Innenverzahnung versehen ist, bei der peripher radial nach innen zeigende Zähne (44.1, ... 44.n) und dazwischenliegende Zahnlücken angeordnet sind,

   **dadurch gekennzeichnet,**

   - **daß** im Zahnkranz (44) wenigstens teilweise wenigstens ein Dauermagnetkörper (44.1', ... 44.n') angeordnet ist,

   - **daß** mit dem ersten Drehkörper (5, 5') ein zweiter zylinderförmiger Drehkörper (40) verbunden ist, an dessen Peripherie wenigstens ein Stellungsgeberelement (41.1, ... 41.n) angeordnet ist,

   - **daß** eine erste Stellungsabgabeeinheit (60) vorgesehen ist, die wenigstens ein erstes Stellungserfassungselement (6.1, ... 6.n, 60.1, ... 60.n) aufweist und

   - **daß** die Stellungsgebereinheit (1) um eine Längsachse (A) zu bewegen ist und dabei die Stellungsgeberzähne (11.1, ... 11.n) unter Belassung jeweils eines Luftspaltes (B3) gegenüber den Zähnen (44.1, ... 44.n) der ersten Stellungsanwahlleinheit (2) festlegbar und diese Stellungen mit den Stellungsgeberelementen (44.1, ... 44.n) durch die ersten Stellungserfassungselemente (6.1, ... 6.n, 60.1, ... 60.n) zu erfassen sind.

2. Vorrichtung nach Anspruch 1, **dadurch gekennzeichnet,**

   - **daß** am zweiten zylinderförmigen Drehkörper (40) ein Fingerkörper (42) vorgespannt gehalten ist,

   - **daß** eine zweite Stellungsanwahleinheit (27) vorgesehen ist, die eine Ausnehmung aufweist, durch die der Fingerkörper (42) zu führen ist,

   - **daß** eine zweite Stellungsabgabeeinheit (8, 28) vorgesehen ist, die wenigstens ein zweites Stellungserfassungselement (57) aufweist, und

- **daß** weiterhin die Stellungsgebereinheit (1) entlang der Längsachse (A) mit dem Fingerkörper (42) in der Ausnehmung zu verschieben ist und dabei der zweite Drehkörper (40) wenigstens teilweise auf der zweiten Stellungsanwahleinheit (29) aufzusetzbar ist und diese Stellung durch das zweite Stellungserfassungselement (57) zu erfassen ist.

3. Vorrichtung nach Anspruch 2, **dadurch gekennzeichnet,**

   - **daß** eine dritte Stellungsanwahleinheit einen Basiskörper (4; 90) aufweist, dem eine quer zur Längsachse (A) liegende Ebene (E) zugeordnet ist, auf deren der ersten Stellungsabgabeeinheit (60) zugewandten Oberfläche (13; 56) wenigstens ein erster Permanentmagnet (38; 58.1, ... 58.4) angeordnet ist,

   wobei dem ersten Permanentmagneten (38; 58.1, ... 58.n) wenigstens teilweise gegenüberliegend unterhalb der zweiten Stellungsabgabeeinheit ein zweiter Permanentmagnet (8.1; 58) angeordnet ist,

   - **daß** eine dritte Stellungsabgabeeinheit (13; 56) mit wenigstens einem dritten Stellungserfassungselement (8.1, 59.1, ...; 59'.1, ... 59'.n) vorgesehen ist, und

   - **daß** die Stellungsgebereinheit (1) über die zweite Stellungsanwahleinheit (60) gegenüber dem Basiskörper (4; 90) zweidimensional mit einer Verfahreinrichtung (21.1, ... 21.4, 31.1, ... 31.4; 56, 58.1, ... 58.4) zu verfahren ist und diese Stellung durch die dritten Stellenerfassungselemente (8.1, 59.1, ... 59.n; 8.1, 59'.1, ... 59'.n) zu erfassen ist.

4. Vorrichtung nach Anspruch 1 oder 2, **dadurch gekennzeichnet,**

   - **daß** als vierte Stellungsanwahleinheit eine Kippgehäuseeinheit (173, 184, 273, 284) vorgesehen ist, in der wenigstens ein Einzelgebermagnet (91.1, ... 91.n; 290.1) angeordnet ist und die mit wenigstens einem Einzelgebermagnet (189.1, ... 189.n; 291.1) versehene Stellungsgebereinheit (1) kardanisch gehalten ist, und

   - **daß** eine vierte Stellungsabgabeeinheit (20, 180.1, ... 180.n; 20, 281.1) mit wenigstens einem vierten Stellungserfassungselement (197.1, ... 197.n; 297.1) vorgesehen ist, wobei die Stellungsgebereinheit (1) gegenüber der Kippgehäuseeinheit (173, 184; 273, 284) zu verstellen ist und diese Stellung durch die vierten Stellungserfassungselemente (197.1, ... 197.n; 297.1) zu erfassen ist.

5. Vorrichtung nach einem der Ansprüche 1 bis 6, **dadurch gekennzeichnet, daß** die Magnetisierungseinheit wenigstens aus einer Spule (11) besteht, die auf der Welle (5.1) wenigstens teilweise und an dem ersten Drehkörper (5, 5') wenigstens teilweise angeordnet ist.

6. Vorrichtung nach einem der Ansprüche 1 bis 5, **dadurch gekennzeichnet, daß** die Welle (5.1) und der erste zylinderförmige Drehkörper (5, 5') aus einem magnetisch leitenden Material bestehen.

7. Vorrichtung nach einem der Ansprüche 1 bis 6, **dadurch gekennzeichnet, daß** die Welle (5.1) und der erste Drehkörper (5, 5') einstückig hergestellt sind.

8. Vorrichtung nach einem der Ansprüche 1 bis 8, **dadurch gekennzeichnet, daß** die erste Stellungsabgabeeinheit einen Scheibenkörper (60) aufweist, auf dem gegenüber untereinander beabstandeten Dauermagneteinheit (6.1, ... 6.n) erste Hall-Elemente (60.1, ... 60.n) als erste Stellungserfassungselemente angeordnet sind, zwischen denen die Stellungsgeberelemente (41.1, ... 41.n) als am zweiten Drehkörper (40) beabstandet gehaltene magnetisch leitfähige Fähnchen zu bewegen und festzustellen sind.

9. Vorrichtung nach einem der Ansprüche 1 bis 8, **dadurch gekennzeichnet,**

   - **daß** der Basiskörper (4) an seiner quer zur Längsachse (A) liegenden, der zweiten Stellungsanwahleinheit zugewandten Oberfläche (13), deren Lage etwa der Ebene (E) entspricht, vier Kreuzanordnungen (21.1, ... 21.4) aufweist, die jeweils paarig an den ein Koordinatensystem bildenden Achsen (X, Y) angeordnet sind,

   - **daß** die Kreuzanordnungen (21.1, ... 21.4) jeweils aus zwei im Material des Basiskörpers (4) eingearbeiteten Rillen (21.1, 22.2) bestehen, deren Schnittpunkte (P) und eine der Rillen an der jeweiligen Koordinatenachse (X, Y) liegen, und

   - **daß** ein inneres Gehäuse (20) vorgesehen ist, das wenigstens die Stellungsgebereinheit (1) und die erste Stellungsabgabe- und -erfassungseinheit umgibt, und dessen dem Basiskörper (4) hier zugewandte, die Ebene (E) parallel angeordnete Wand (23) mit über die Wandebene hinausragenden und innerhalb der Kreuzanordnungen bewegbaren Führungselementen (32.1, ... 32.4) versehen sind, wobei die Führungselemente (32.1, ...32.4) untereinander den gleichen Abstand wie durch die Rillen (22.1, 22.2) gebildeten Schnittpunkte (P) der Kreuzanordnung haben.

10. Vorrichtung nach einem der Ansprüche 1 bis 9, **dadurch gekennzeichnet,**

    - **daß** die Stellungsgebereinheit (1) oder eine der Stellungsanwahleinheiten wenigstens mit einem ersten Magnethaltekörper (80) abgestützt ist, der einen zentral angeordneten Permanentmagnet (48) besitzt, der vorzugsweise in einer weiteren Ebene (E1) liegt, die eine Innenfläche (83) des ersten Magnethaltekörpers (80) zugeordnet ist, und

    - **daß** als Basiskörper ein zweiter Magnethaltekörper (90) eine ein Koordinatensystem (X1, Y1) bildende Permanentmagnet-Anordnung (58) aufweist, die in den zweiten Magnethaltekörper (90) derart eingelassen ist, daß die zur Permanentmagnet-Anordnung (58) gehörenden Permanentmagnete (58.1, ... 58.4) mit ihrer Außenfläche (54) auf einer Innenfläche (46) des zweiten Magnethaltekörpers (90) liegen, die mit der Innenfläche (83) des ersten Magnethaltekörpers (80) im Kontakt steht, und die paarweise an einer jeweiligen Koordinatenachse des Koordinatensystems (X1, Y1) angeordnet sind.

11. Vorrichtung nach einem der Ansprüche 1 bis 10, **dadurch gekennzeichnet, daß** die zweite Stellungsanwahleinheit ein in einem Hülsenelement (27) an einem magnetisch leitfähigen Boden (28) gehaltener PermanentTippschaltmagnet (8) ist, wobei der im Hülsenelement (27) gehaltene Permanent-Tippschaltmagnet (8) zugleich die zweite Stellungsabgabeeinheit ist, deren Stellungsänderung durch ein zweites Hall-Element (57) als zweites Stellungserfassungselement zu erfassen ist.

12. Vorrichtung nach einem der Ansprüche 1 bis 11, **dadurch gekennzeichnet, daß** der Permanent- Tippschaltmagnet (8) bei magnetisch angezogener Stellung am ferritischen Boden (28) die Stellungsgebereinheit (1) über den Fingerkörper (42) vorgespannt in dem Hülsensegment (29) gehalten ist.

13. Vorrichtung nach einem der Ansprüche 1 bis 11, **dadurch gekennzeichnet, daß** die dritte Abgabeeinheit wenigstens durch den zweiten Permanentmagnet (8.1; 48) ausgebildet ist, dessen Stellungsänderung durch dritte Hall-Elemente (59.1, ..., 59.n) als dritte Erfassungselemente zu erfassen ist.

14. Vorrichtung nach einem der Ansprüche 1 bis 13, **dadurch gekennzeichnet, daß** die Kippgehäuseeinheit als ein Kippgehäuse (173; 273) mit einem wenigstens teilweise einseitig verschlossenen Hohlzylinder oder Hohlquader ausgebildet ist, dessen offene Seite wenigstens teilweise durch einen Deckel (184; 284) verschlossen ist.

15. Vorrichtung nach einem der Ansprüche 1 bis 14, **dadurch gekennzeichnet, daß** das Kippgehäuse (173; 273) und der Dekkel (184; 284), in denen die Stellungsgebereinzelmagnete (190.1, ... 190.n; 290.1) angeordnet sind, zugleich die vierte Stellungsanwahleinheit ausbilden.

16. Vorrichtung nach Anspruch 9, **dadurch gekennzeichnet, daß** die Führungselemente (32.1, ... 32.4) Kugeln sind, die jeweils in eine der Wand (23) des inneren Gehäuses (20) eingearbeitete Vertiefung (33) geführt sind.

17. Vorrichtung nach einem der Ansprüche 1 bis 16, **dadurch gekennzeichnet, daß** der Basiskörper (4) bzw. der Magnethaltekörper (90) Teil eines äußeren, vorzugsweise zylindrischen Gehäuses (10) ist, das das innere Gehäuse (20) wenigstens teilweise umgibt.

18. Vorrichtung nach einem der Ansprüche 1 bis 17, **dadurch gekennzeichnet, daß** das äußere Gehäuse (10) an seiner dem Basiskörper (4) bzw. dem Magnethaltekörper (90) gegenüberliegenden Wand (14) mit Öffnungen (14.1, ... 14.n) für die Aufnahme von Verbindungselementen (14.1.1, ... 14.1.n) versehen ist, so daß das innere Gehäuse mit einem Betätigungsknopf (30) zu verbinden ist.

19. Vorrichtung nach einem der Ansprüche 1 bis 18, **dadurch gekennzeichnet, daß** die Welle (5.1) einseitig mit einem Betätigungsknopf (30; 300) versehen ist.

20. Vorrichtung nach Anspruch 19, **dadurch gekennzeichnet, daß** der Betätigungsknopf (30; 300) knopfförmig ausgebildet ist und wenigstens teilweise das innere Gehäuse (20) umgibt.

21. Vorrichtung nach Anspruch 19 und 20, **dadurch gekennzeichnet, daß** der Betätigungsknopf (30; 300) eine die Handhabung erleichternde Mulde (34) aufweist.

**Claims**

1. A device for generating selection positions, particularly for selecting a computer on board a vehicle or a washing-machine control system or the like, comprising:

- a position indicator unit (1) comprising a shaft (5.1) on which at least a first cylindrical rotary member (5, 5') is disposed,

- wherein the first rotary member (5, 5') has external teeth, wherein the peripheral radially outwards-pointing position-indicating teeth (11.1, ... 11.n) are disposed with gaps (19.1, ... 19.n) in between, and

   wherein the first rotary member (5, 5') is associated with a magnetising unit (11), and

- a first position selector unit (2) disposed at least partly coaxially round the first rotary member (5, 5') of the position indicator unit (1) and comprising a toothed rim (44) with internal teeth wherein the peripheral radially inwardly projecting teeth (44.1, 44.n) are disposed with gaps in between,

**characterised in that**

- at least one permanent magnet member (41.1', ... 41.n') is disposed at least partly in the toothed rim (44),

- a second cylindrical rotary member (40) is connected to the first rotary member (5, 5') and at least one position indicator element (41.1, ... 41.n) is disposed on its periphery,

- a first position delivery unit (60) is provided and comprises at least a first position detecting element (6.1, ... 6.n, 60.1, ... 60.n) and

- the position indicator unit (1) is movable around a longitudinal axis (A) and the position indicating teeth (11.1, ... 11.n) are lockable, leaving respective air gaps (B3), relative to the teeth (44.1, ... 44.n) of the first position selecting unit (2) and the said positions are detectable by the position indicator elements (44.1, ... 44.n) via the first position detecting elements (6.1, ... 6.n, 60.1, ... 60.n).

2. A device according to claim 1, **characterised in that**

- a prestressed finger member (42) is held on the second cylindrical rotary member (40),

- a second position selecting unit (27) is provided and has a recess through which the finger member (42) can be inserted,

- a second position delivery unit (8, 28) is provided and comprises at least a second position detecting element (57), and

- the position indicator unit (1) is movable along the longitudinal axis (A) with the finger member (42) in the recess and the second rotary member (40) can be at least partly set on the second position selecting unit (29) and this position is detectable by the second position detecting element (57).

3. A device according to claim 2, **characterised in that**

- a third position selecting unit has a base member (4; 90) associated with a plane (E) at right angles to the longitudinal axis (A) and at least a first permanent magnet (38; 58.1, ... 58.4) is disposed on the plane surface (13; 56) facing the first position delivery unit (60),

wherein a second permanent magnet (8.1; 58) is disposed at least partly opposite the first permanent magnet (38; 58.1, ... 58.n) underneath the second position delivery unit,

- a third position delivery unit (13; 56) is provided with at least one third position detecting unit (8.1, 59.1, ...; 59'.1, ... 59'.n) and
- the position indicator unit (1) is movable via the second position selector unit (60) in two dimensions relative to the base member (4. 90) by a drive means (21.1, ... 21.4, 31.1, ... 31.4; 56, 58.1, ... 58.4) and this position is detected by the third position detecting elements (8.1, 59.1, ... 59.n; 8.1, 59'.1, ... 59'.n).

4. A device according to claim 1 or 2, **characterised in that**

- the fourth position selector element is a tilting casing unit (173, 84, 273, 284) in which at least one individual indicator magnet (91.1, ... 91.n; 290.1) is disposed and the position indicator unit, provided with at least one individual indicator magnet (189.1, ... 189.n; 291.1), is gimbal-suspended, and

- a fourth position delivery unit (20, 181.1, ... 180.n; 20, 281.1) is provided with at least one fourth position detecting element (197.1, ... 197.n; 297.1), wherein the position indicator unit (1) is adjustable relative to the tilting casing unit (173, 184; 273, 284) and this position is detectable by the fourth position detecting elements (197.1, ... 197.n; 297.1).

**5.** A device according to any of claims 1 to 6, **characterised in that** the magnetising unit comprises at least one coil (11) disposed at least partly on the shaft (5.1) and at least partly on the first rotary member (5.5').

**6.** A device according to any of claims 1 to 5, **characterised in that** the shaft (5.1) and the first cylindrical rotary member (5, 5') are made of a magnetically conducting material.

**7.** A device according to any of claims 1 to 6, **characterised in that** the shaft (5.1) and the first rotary member (5, 5') are made in one piece.

**8.** A device according to any of claims 1 to 8, **characterised in that** the first position delivery unit has a disc member (60) on which first position detecting elements in the form of first Hall elements (60.1, ... 60.n) are disposed opposite spaced-apart permanent magnet units (6.1, ... 6.n) and between the Hall elements the position indicator elements (41.1, ... 41.n) in the form of magnetically conducting lugs held spaced-apart on the second rotary member (40) are movable and detectable.

**9.** A device according to any of claims 1 to 8, **characterised in that**

- the base member (4) has four cross arrangements (21.1, ... 21.4) on its surface (13) at right angles to the longitudinal axis (A) and facing the second position selection unit and approximately on the plane (E), the crosses being disposed in pairs along the axes (X, Y) constituting a co-ordinate system,

- the cross arrangements (21.1, ... 21.4) each comprise two grooves (21.1, 22.2) formed in the material of the base member (4), the intersections (P) and one of the grooves lying on a respective co-ordinate axis (X, Y) and

- an inner casing (20) is provided and surrounds at least the position indicator unit (1) and the first position delivery and detection unit, and its wall (23) parallel to the plane (E) and facing the base member (4) here has guide elements (32.1, ... 32.4) projecting beyond the wall plane and movable inside the cross arrangements wherein the guide elements (32.1, 32.4) have the same spacing between them as the intersections (P) of the cross arrangement formed by the grooves (22.1, 22.2).

**10.** A device according to any one of claims 1 to 9, **char-**

**acterised in that**

- the position indicator unit (1) or one of the position indicator units is supported at least by a first magnet-holding member (80) comprising a centrally disposed permanent magnet (48) which preferably lies in a second plane (E1) associated with an inner surface (83) of the first magnet-holding member (80), and

- the base member in the form of a second magnet-holding member (90) comprises a permanent magnet arrangement (58) forming a co-ordinate system (X1, Y1) and inserted in the second magnet-holding member (90) so that the outer surfaces (54) of the permanent magnets (58.1, ... 58.4) belonging to the permanent magnet arrangement (58) rest on an inner surface (46) of the second magnet-holding member (90) in contact with the inner surface (83) of the first magnet-holding member (80), and are disposed in pairs on a respective axis of the co-ordinate system (X1, Y1).

**11.** A device according to any of claims 1 to 10, **characterised in that** the second position selector unit is a permanent touch control magnet (8) held in a sleeve element (27) on a magnetically conducting base (28), wherein the permanent touch control magnet (8) held in the sleeve element (27) is also the second position delivery unit, the change in position of which is detectable by a second position detector element in the form of a second Hall element (57).

**12.** A device according to any of claims 1 to 11, **characterised in that** the permanent touch control magnet (8) in the magnetically attracted position on the ferrite bottom (28) [of] the position detector unit (1) is held prestressed in the sleeve segment (29) by the finger member (42).

**13.** A device according to any of claims 1 to 11, **characterised in that** the third delivery unit is formed at least by the second permanent magnet (8.1; 48), the change in position of which is detectable by third detecting elements in the form of third Hall elements (59.1, ..., 59.n).

**14.** A device according to any of claims 1 to 13, **characterised in that** the tilting casing element is in the form of a tilting casing (173; 273) comprising a hollow cylinder or hollow cuboid at least partly closed on one side, the open side of which is at least partly closed by a cover (184; 284).

**15.** A device according to any of claims 1 to 14, **characterised in that** the tilting casing (173; 273) and the cover (184; 284) in which the individual position indicating magnets (190.1, ... 190.n; 290.1) are disposed also constitute the fourth position selector unit.

16. A device according to claim 9, **characterised in that** the guide elements (32.1, ... 32.4) are balls, each guided in a recess (33) formed in the wall (23) of the inner casing (20).

17. A device according to any of claims 1 to 16, **characterised in that** the base member (4) or the magnet holding member (90) is a part of an outer preferably cylindrical casing (10) which at least partly surrounds the inner casing (20).

18. A device according to any of claims 1 to 17, **characterised in that** the wall (14) of the outer casing (10) opposite the base member (4) or the magnet-holding member (90) has openings (14.1, ... 14.n) for receiving connecting elements (14.1.1, ... 14.1.n), so that the inner casing can be connected to an actuating knob (30).

19. A device according to any of claims 1 to 18, **characterised in that** the shaft (5.1) has an actuating knob (30; 300) at one end.

20. A device according to claim 19, **characterised in that** the actuating knob (30; 300) is knob-shaped and at least partly surrounds the inner casing (20).

21. A device according to claims 19 and 20, **characterised in that** the actuating knob (30; 300) has a cavity (34) for gripping.

## Revendications

1. Dispositif de génération de positions à sélectionner, en particulier pour sélection pour un ordinateur de bord de véhicule, une commande de machine à laver ou similaire, qui comprend:

   - une unité d'indicateur (1) de position, qui se compose d'un arbre (5.1) sur lequel est agencé au moins un premier corps rotatif cylindrique (5, 5'),

   le premier corps rotatif (5, 5') comportant une denture extérieure sur la périphérie de laquelle sont agencés des dents d'indicateur (11.1, ... 11.n) de position dirigées vers l'extérieur et des entredents (19.1, ... 19.n) d'indicateur de position intercalés entre elles, et

   une unité d'aimantation (11) étant associée au premier corps rotatif (5, 5'), et

   - une première unité de sélection (2) de position qui est agencée au moins en partie coaxialement autour du premier corps rotatif (5, 5') de l'unité d'indicateur (1) de position et se compose d'une couronne dentée (44) qui comporte une denture interne sur la périphérie de laquelle sont agencées des dents (44.1, ... 44.n) tournées radialement vers l'intérieur et des entredents d'indicateur de position intercalés entre elles,

   **caractérisé en ce qu'**il comporte en outre

   - au moins un corps d'aimant permanent (44.1', ... 44.n') agencé au moins partiellement dans la couronne dentée (44),

   - un deuxième corps rotatif cylindrique (40) comportant sur sa périphérie au moins un élément indicateur (41.1, ... 41.n) de position et connecté au premier corps rotatif (5, 5'),

   - un deuxième corps rotatif cylindrique (40) comportant sur sa périphérie au moins un élément indicateur (41.1, ... 41.n) de position et connecté au premier corps rotatif (5, 5'),

   - une première unité de lecture (60) de position qui comporte au moins un premier élément de détection (6.1, ... 6.n, 60.1, ... 60.n),

   et **en ce qu'**il est en outre prévu que

   - l'unité d'indicateur (1) de position est déplacée autour d'un axe longitudinal (A) et les dents (11.1, ... 11.n) d'indication de position peuvent alors être fixées par rapport aux dents (44.1, ... 44.n) de la première unité de sélection (2) de position en ménageant respectivement un entrefer (B3), et que ces positions sont détectées par les éléments de détection (6.1, ... 6.n, 60.1, ... 60.n) de position au moyen des premiers éléments d'indication (44.1, ... 44.n) de position.

2. Dispositif selon la revendication 1, **caractérisé en ce qu'**il comprend

   - un corps (42) de doigt maintenu précontraint sur le deuxième corps rotatif cylindrique (40),

   - une deuxième unité de sélection (27) de position qui comprend un évidement prévu pour que le corps de doigt (42) soit guidé à travers lui,

   - une deuxième unité de lecture (8, 28) de position qui comporte au moins un deuxième élément de détection (57) de position,

et **en ce qu'**il est en outre prévu que

- l'unité d'indicateur (1) de position coulisse le long de l'axe longitudinal (A) avec le corps de doigt (42) dans l'évidement et le deuxième corps rotatif (40) est alors posé au moins partiellement sur la deuxième unité de sélection (29) de position, et que cette position est détectée par le deuxième élément de détection (57) de position.

3. Dispositif selon la revendication 2, **caractérisé en ce qu'**il comprend en outre

- une troisième unité de sélection de position qui comporte un corps de base (4; 90) auquel est associé un plan (E) qui est normal à l'axe longitudinal (A) et comporte au moins un premier aimant permanent (38; 58.1, ... 58.4) sur sa surface (13; 56) tournée vers la première unité de lecture (60) de position,

  un deuxième aimant permanent (8.1; 58) étant agencé au moins en partie face au premier aimant permanent (38; 58.1, ... 58.n) au-dessous de la deuxième unité de lecture de position,

- une troisième unité de lecture (13; 56) de position qui inclut au moins un troisième élément de détection (8.1, 59.1, ... 59.n; 59'.1, ... 59'.n),

  et **en ce qu'**il est en outre prévu que

- l'unité d'indicateur (1) de position est déplacée par un dispositif de déplacement (21.1, ... 21.4, 31.1, ... 31.4; 56, 58.1, ... 58.4) par rapport au corps de base (4; 90) dans deux dimensions au moyen de la deuxième unité de sélection (60) de position et que cette position est détectée par le troisième élément de détection (8.1, 59.1, ... 59.n; 8.1, 59'.1, ... 59'.n) de position.

4. Dispositif selon la revendication 1 ou 2, **caractérisé en ce qu'**il comprend en outre

- une unité de boîtier de basculement (173, 184, 273, 284) dans laquelle est agencé au moins un aimant d'indicateur individuel (91.1, ... 91.n; 290.1) intervenant comme quatrième unité de sélection de position, l'unité d'indicateur (1) de position qui comporte au moins un aimant d'indicateur individuel (189.1, ... 189.n; 291.1) étant tenue par cardan,

- et une quatrième unité de lecture (20, 180.1, ... 180.n; 20, 281.1) qui comporte au moins un quatrième élément de détection (197.1, ... 197.n; 297.1) de position, et **en ce qu'**il est en outre prévu que l'unité d'indicateur (1) de position est déplacée par rapport à l'unité de boîtier de basculement (173; 184; 273, 284) et que cette position est détectée par les quatrièmes éléments de détection (197.1, ... 197.n; 297.1) de position.

5. Dispositif selon l'une quelconque des revendications précédentes **caractérisée en ce que** l'unité d'aimantation se compose d'au moins une bobine (11) qui est agencée au moins en partie sur l'arbre (5.1) et au moins en partie sur le premier corps rotatif (5, 5').

6. Dispositif selon l'une quelconque des revendications précédentes, **caractérisé en ce que** l'arbre (5.1) et le premier corps rotatif cylindrique (5, 5') se composent d'une matière magnétiquement conductrice.

7. Dispositif selon l'une quelconque des revendications précédentes, **caractérisé en ce que** l'arbre (5.1) et le premier corps rotatif (5, 5') sont réalisés d'un seul tenant.

8. Dispositif selon l'une quelconque des revendications précédentes, **caractérisé en ce que** la première unité de lecture de position inclut un corps discoïdal (60) sur lequel des premiers éléments de Hall (60.1, ... 60.n) sont agencés comme premiers éléments de détection de position face à des unités d'aimants permanents (6.1, ... 6.n) espacées l'une de l'autre, et **en ce qu'**il est prévu que les éléments indicateurs (41.1, ... 41.n) en forme de talons magnétiquement conducteurs espacés sur le deuxième corps rotatif (40) sont déplacés et fixés entre ces éléments de Hall.

9. Dispositif selon l'une quelconque des revendications précédentes, **caractérisé en ce que**

- le corps de base (4) comporte, sur sa surface (13) qui est disposée normalement à l'axe longitudinal (A) et tournée vers la deuxième unité de sélection de position et dont la position correspond à peu près au plan (E), quatre agencements en croix (21.1, ... 21.4) qui sont agencés respectivement par paires sur les axes (X, Y) qui forment un système de coordonnées,

- **en ce que** les agencements en croix (21.1, ... 21.4) se composent respectivement de deux rainures (21.1, 22.2) usinées dans la matière du corps de base (4) dont les points d'intersection (P) et l'une des rainures sont agencés dans l'axe respectif de coordonnées (X, Y), et **en ce que**

- le dispositif comprend en outre un boîtier interne (20) qui entoure au moins l'unité d'indicateur (1) de position et la première unité de lecture et de détection de position et dont la paroi (23) agencée parallèlement au plan (E) et tournée ici vers le corps de base (4) comporte des éléments de guidage (32.1, ... 32.4) qui font saillie au-dessus du plan de la paroi et sont mobiles à l'intérieur des agencements en croix, et que la distance entre les éléments de guidage (32.1, ... 32.4) est la même que la distance entre les points d'intersection (P) formés par les rainures (22.1, 22.2) de l'agencement en croix.

10. Dispositif selon l'une quelconque des revendications précédentes, **caractérisé en ce que**

- l'unité d'indicateur (1) de position ou l'une des unités de sélection de position est protégée au moins par un premier corps de maintien (80) d'aimants qui possède un aimant permanent (48) qui est agencé en son centre et disposé de préférence dans un autre plan (E1) qui est associé à une surface interne (83) du premier corps de maintien d'aimant, et **en ce que**

- un deuxième corps de maintien (90) d'aimants comprend comme corps de base un agencement (58) d'aimant permanent qui forme un système de coordonnés (X1, Y1) et qui est emboîté dans le deuxième corps de maintien (90) d'aimants d'une manière telle que les aimants permanents (58.1, ... 58.4) qui appartiennent à l'agencement (58) d'aimants permanents reposent par leurs surfaces externes (54) sur une surface interne (46) du deuxième corps de maintien (90) d'aimants qui est au contact de la surface interne (83) du premier corps de maintien (80) d'aimants, et qui sont agencés par paires sur un axe respectif de coordonnées du système (X1, Y1) de coordonnées.

11. Dispositif selon l'une quelconque des revendications précédentes, **caractérisé en ce que** la deuxième unité de sélection de position est un aimant permanent (8) de commutation par impulsions qui est tenu à un fond magnétiquement conducteur (28) dans un élément (27) à douille, l'aimant permanent (8) à commutation par impulsions maintenu dans l'élément (27) à douille étant en même temps la deuxième unité d'indicateur de position et **en ce qu'**il est prévu qu'une modification de position de cette unité est détectée par un deuxième élément de Hall (57) intervenant comme deuxième élément de détection de position.

12. Dispositif selon l'une quelconque des revendications précédentes, **caractérisé en ce que** l'aimant permanent (8) de commutation par impulsions est maintenu précontraint dans le segment (29) de douille au moyen du corps (42) de doigt dans la position magnétiquement attirée sur le fond ferritique (28).

13. Dispositif selon l'une quelconque des revendications 1 à 11, **caractérisé en ce que** la troisième unité de lecture est constituée au moins par le deuxième aimant permanent (8.1; 48) et **en ce qu'**il est prévu qu'une modification de position de ce dernier est détectée par des troisièmes éléments de Hall (59.1, ..., 59.n) intervenant comme troisièmes éléments de détection.

14. Dispositifs selon l'une des revendications précédentes, **caractérisé en ce que** l'unité de boîtier de basculement consiste en un boîtier de basculement (173; 273) comportant un cylindre creux ou un parallélépipède creux fermé au moins en partie sur un côté, dont le côté ouvert est fermé au moins en partie par un couvercle (184; 284).

15. Dispositif selon l'une quelconque des revendications précédentes, **caractérisé en ce que** le boîtier de basculement (173, 273) et le couvercle (184; 284) dans lesquels les aimants individuels (190.1, ... 190.n; 290.1) d'indication de position sont agencés constituent simultanément la quatrième unité de sélection de position.

16. Dispositif selon la revendication 9, **caractérisé en ce que** les éléments de guidage (32.1, ... 32.4) sont des billes qui sont respectivement guidées dans un évidement (33) usiné dans une paroi (23) du boîtier interne (20).

17. Dispositif selon l'une quelconque des revendications précédentes, **caractérisé en ce que** le corps de base (4) ou le corps de maintien (90) d'aimants fait partie d'un boîtier externe (10) de préférence cylindrique qui entoure au moins en partie le boîtier interne (20).

18. Dispositif selon l'une quelconque des revendications précédentes, **caractérisé en ce que** le boîtier externe (10) comporte, sur sa paroi (14) opposée au corps de base (4) ou au corps de maintien (90) d'aimants, des ouvertures (14.1, ... 14.n) pour recevoir des éléments de connexion (14.1.1, ... 14.1.n) et **en ce qu'**il est prévu que le boîtier interne est ainsi connecté à un bouton de manoeuvre (30).

19. Dispositif selon l'une quelconque des revendications précédentes, **caractérisé en ce que** l'arbre (5.1) comporte sur un côté un bouton de manoeuvre (30; 300).

**20.** Dispositif selon la revendication 19, **caractérisé en ce que** le bouton de manoeuvre (30; 300) est en forme de bouton et entoure au moins en partie le boîtier interne (20).

**21.** Dispositif selon la revendication 19 ou 20, **caractérisé en ce que** le bouton de manoeuvre (30; 300) comporte un creux (34) qui facilite son maniement.

Fig. 1a

**Fig. 1b**

EP 0 886 817 B1

Fig. 1c

Fig. 1d

Fig. 2

6.1

B1

60.1

41.n

41.1

60.n

6.n

X°

**Fig. 3a**

B2

60

60.1

60.n

**Fig. 3b**

EP 0 886 817 B1

41.1

41.n

19.n

11.1

19.1

11.n

5

**Fig. 4a**

41.1    11.1    5    5.1

42

40

41.n    11.n

**Fig. 4b**

EP 0 886 817 B1

Fig. 5b

Fig. 5a

**Fig. 6**

**Fig. 7**

**Fig. 8**

Fig. 10

Fig. 9

EP 0 886 817 B1

**Fig. 11**

**Fig. 12**